(19) **Europäisches Patentamt**

**European Patent Office**

**Office européen des brevets**

(11) **EP 0 791 566 B1**

(12) **EUROPÄISCHE PATENTSCHRIFT**

(45) Veröffentlichungstag und Bekanntmachung des Hinweises auf die Patenterteilung:
**05.12.2001   Patentblatt 2001/49**

(51) Int Cl.⁷: **C04B 41/49**
// C04B111:27

(21) Anmeldenummer: **97102294.2**

(22) Anmeldetag: **13.02.1997**

(54) **Selbstgrundierende Baustoffbeschichtungen**

Self-priming coating for building materials

Revêtement auto-apprêtant pour matériaux de construction

(84) Benannte Vertragsstaaten:
**AT BE CH DE ES FI FR GB IT LI NL SE**

(30) Priorität: **15.02.1996  DE 19605674**

(43) Veröffentlichungstag der Anmeldung:
**27.08.1997   Patentblatt 1997/35**

(73) Patentinhaber: **Wacker-Chemie GmbH**
**81737 München (DE)**

(72) Erfinder:
- **Mayer, Hans, Dr.**
  **84489 Burghausen (DE)**
- **Hausberger, Albert**
  **83361 Kienberg (DE)**
- **Koenig-Lumer, Ingeborg**
  **84489 Burghausen (DE)**

(74) Vertreter: **Fritz, Helmut, Dr. et al**
**Wacker-Chemie GmbH,**
**Zentralabteilung Patente,**
**Marken und Lizenzen,**
**Hanns-Seidel-Platz 4**
**81737 München (DE)**

(56) Entgegenhaltungen:
EP-A- 0 606 671          DE-A- 4 242 445
US-A- 4 648 904          US-A- 5 316 799

- CHEMICAL ABSTRACTS, vol. 119, no. 8, 23.August 1993 Columbus, Ohio, US; abstract no. 78612w, XP000405139 & SU 1 738 781 A (BRUSS POLT INSTITUT) 7.Juni 1992
- CHEMICAL ABSTRACTS, vol. 104, no. 26, 30.Juni 1986 Columbus, Ohio, US; abstract no. 229558b, XP000064595 & SU 1 219 576 A (RESEARCH INSTITUTE OF THE WOOD PROCESSING INDUSTRY) 23.März 1986

**Beschreibung**

Die Erfindung betrifft ein Verfahren zur Beschichtung und wasserabweisenden Imprägnierung von mineralischem Baustoff, bei dem ein Baustoffbeschichtungsmittel, welches Alkylalkoxysilan als Imprägnierungsmittel enthält, auf den Baustoff aufgetragen wird, sowie ein Baustoffbeschichtungsmittel, welches Alkylalkoxysilan und gegebenenfalls Alkoxygruppen enthaltendes Organopolysiloxan als Imprägnierungsmittel enthält.

Mineralische Baustoffe werden gegen Witterungeinflüsse üblicherweise am besten durch eine wasserabweisende Imprägnierung und eine darauf aufgetragene Beschichtung geschützt. Aus einer wasserabweisenden Imprägnierung wird eine wasserabweisende Grundierung, sobald erstere beschichtet wird.

Die Grundierung wird direkt auf den mineralischen Untergrund aufgebracht. Sie macht den Untergrund bis in eine gewisse Tiefe durch Ausbildung einer hydrophoben Zone wasserabweisend und sorgt für dauerhaft verbesserte Verbindung zwischen dem gleichmäßig hydrophobierten Untergrund und der Baustoffbeschichtung. Organosilane, oligomere Organosiloxane oder Siliconharze sind die besten Wirkstoffe für wasserabweisende Grundierungen.

Es werden lösemittelhaltige und wäßrige Grundiermittel eingesetzt. Lösemittelhaltige Grundiermittel enthalten meist neben Organosilanen, oligomeren Organosiloxanen oder Siliconharzen Kunstharze, wie Styrolacrylate und Reinacrylate, die zur Verfestigung des Untergrunds dienen.

Der Vorteil der wäßrigen Grundiermittel liegt darin, daß sie keine oder keine nennenswerten Anteile an organischen Lösemitteln enthalten. Sie können überall dort eingesetzt werden, wo der Untergrund noch einigermaßen intakt ist. Zum Einsatz kommen dann die hochalkalischen wäßrigen Kaliumsiliconatlösungen, Microemulsionen oder Emulsionen von Organosilanen, oligomere Organosiloxanen oder Siliconharzen. In jedem Fall führt die hydrophobierende Grundierung zu einem egalisierenden Saugverhalten des Untergrundes und somit zu einer verbesserten Haftung der Baustoffbeschichtung, sowie zu einer in die Tiefe des Untergrunds gehende wasserabweisenden Wirkung. Beispielsweise ist in der EP-A-234 024 die wasserabweisende Imprägnierung von Baustoffen mit einer Emulsion von Alkylalkoxysilanen beschrieben. US-A-4,757,106 beschreibt die Hydrophobierung von Baustoffen mit Microemulsionen aus Alkoxygruppen aufweisenden Organopolysiloxanen und Salzen von Aminosiliconölen.

In US 4 648 904 A sind Emulsionen von Alkylalkoxysilanen beschrieben, welche keine Pigmente oder Füllstoffe enthalten. Die Emulsionen dringen in Mauerwerk ein und imprägnieren dieses.

In US 5 316 799 A wird eine Mischung aus Farbe und Silan/Siloxan als Imprägnierungsmittel hergestellt.

In EP 606 671 A sind Organopolysiloxanharz-, Füllstoff- und Alkoxysilan enthaltende Emulsionen beschrieben, die auf mineralische Baustoffe aufgetragen werden. Die Füllstoffe weisen eine spezifische Oberfläche von mindestens 40 $m^2$/g auf und werden in geringen Mengen zugesetzt.

In der nicht vorveröffentlichten EP 761 675 A sind Cohydrolyseprodukte verschiedener Silane und deren Anwendung als Imprägnierungsmittel und Grundierung beschrieben.

In der nicht vorveröffentlichten EP 776 873 A sind Emulsionen von Silanen und deren Anwendung als wasserabweisendes Imprägnierungsmittel für poröse anorganische Baustoffe beschrieben.

Auf die wasserabweisende Grundierung werden die deckenden Baustoffbeschichtungen in einer oder mehreren Schichten aufgetragen. Beispiele für solche Baustoffbeschichtungen sind Anstrichfarben und Putze. Besonders wichtig ist die Vorbehandlung des Untergrunds mit wasserabweisender Grundierung sobald die Baustoffbeschichtung Emulgatoren oder sonstige Netzmittel enthält.

Der vorliegenden Erfindung liegt die Aufgabe zugrunde, Baustoffbeschichtungsmittel bereitzustellen, die den mineralischen Baustoff gleichzeitig wasserabweisend imprägnieren, mit der Folge, daß auf einen vorherigen Auftrag einer Grundierung verzichtet werden kann.

Die Erfindung betrifft ein Verfahren zur Beschichtung und wasserabweisenden Imprägnierung von mineralischem Baustoff, bei dem ein Baustoffbeschichtungsmittel, welches 1 bis 30 Gew.-% $C_1$-$C_{20}$-Alkyl-$C_2$-$C_3$-Alkoxysilan als Imprägnierungsmittel enthält, auf den Baustoff aufgetragen wird, dadurch gekennzeichnet, daß das Baustoffbeschichtungsmittel eine Anstrichfarbe ist.

Beim Auftrag des wasserhaltigen imprägnierenden Baustoffbeschichtungsmittels kann auf den vorherigen Grundierungsarbeitsgang verzichtet werden, sofern durch die Grundierung Wasserabweisung bis in eine bestimmte Tiefe des Untergrunds bewirkt werden sollte. Das Imprägnierungsmittel dringt bei Applikation des wasserhaltigen imprägnierenden Baustoffbeschichtungsmittels gut in dichte wie auch poröse Baustoffe ein und verleiht dem Baustoff bis in eine bestimmte Tiefe wasserabweisende Eigenschaften.

Üblicherweise wird ein Beschichtungsystem bestehend aus wasserabweisender Grundierung und Deckbeschichtung in zwei oder drei Arbeitsgängen appliziert:

1. Arbeitsgang: Auftrag der wasserabweisenden Grundierung gegebenenfalls
2. Arbeitsgang: Auftrag der mit Wasser etwas verdünnten Deckbeschichtung (Vorbeschichtung)
3. Arbeitsgang: Auftrag der unverdünnten Deckbeschichtung (Schlußbeschichtung)

Bei der vorliegenden Erfindung wird, falls eine Vorbeschichtung eingesetzt wird, das Imprägnierungsmittel in das als Vorbeschichtung dienende Baustoffbeschichtungsmittel gegeben. Selbstverständlich kann die mit Imprägnierungsmittel versetzte Vorbeschichtung auch als Schlußbeschichtung verwendet werden.

Die wichtigsten Baustoffbeschichtungen sind Anstrichfarben und Putze. Die für die Zwecke der Erfindung geeigneten Baustoffbeschichtungsmittel werden entweder trocken geliefert, aber in Form einer wasserhaltigen Zubereitung aufgetragen, wie Pulverfarben und pulverförmige Trockenputze oder sind naß, wie pastöse, wasserhaltige Anstrichfarben, beispielsweise Siliconharzfarben, Silikatfarben und Dispersionsfarben oder wie pastöse, wasserhaltige Putze, beispielsweise Kunstharzputze und Siliconharzputze.

Die für die Zwecke der Erfindung geeigneten imprägnierenden Baustoffbeschichtungsmittel werden dünn aufgetragen, wie deckende Anstrichfarben im 100 µ bis 1 Millimeterbereich.

Die für die Zwecke der Erfindung geeigneten imprägnierenden Baustoffbeschichtungsmittel können sowohl an Gebäuden innen als auch außen, vorzugsweise außen eingesetzt werden. Bevorzugte Beispiele sind Dispersionsfarben, Siliconharzfarben, Siliconfassadenfarben, Dispersionssilikatfarben, Silikatfarben, Kalkfarben, Dispersionskalkfarben, Silikatputze, Trockenputze, Innenfarben, Streichfüller, Armierungsmassen, Spachtelmassen, Fassadenfarben, Kunstharzputze, Mineralfarben, Mineralputze, Siliconharzputze und kunstharzgebundene Beschichtungen.

Vorzugsweise besitzen die $C_1$-$C_{20}$-Alkyl-$C_2$-$C_3$-Alkoxysilane 1 oder 2 gleiche oder verschiedene, gegebenenfalls halogensubstituierte, über SiC-gebundene einwertige $C_1$-$C_{20}$-Alkylreste und die übrigen Reste sind gleiche oder verschiedene $C_2$- oder $C_3$-Alkoxyreste. Besonders bevorzugt sind die Alkyltrialkoxysilane, wie Octyltriethoxysilan und Butyltriethoxysilan.

Beispiele für $C_2$-$C_3$-Alkoxyreste sind der Ethoxy-, n-Propoxy-, Isopropoxyrest. Die Ethoxyreste sind besonders bevorzugt.

Methoxysilane hydrolysieren für viele Anwendungen zu schnell und weisen eine geringere Lagerbeständigkeit als längere Alkoxyreste auf. $C_4$-$C_6$-Alkoxyreste sind für viele Anwendungen zu reaktionsträge.

Beispiele für die $C_1$-$C_{20}$-Alkylreste, sind der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest und Dodecylreste, wie der n-Dodecylrest; Cycloalkylreste, wie Cyclopentyl-, Cyclohexyl-, 4-Ethylcyclohexyl-, Cycloheptylreste, Norbornylreste und Methylcyclohexylreste.

Beispiele für halogensubstituierte $C_1$-$C_{20}$-Alkylreste sind mit Fluor-, Chlor-, Brom- und Jodatomen substituierte Alkylreste, wie der 3,3,3-Trifluor-n-propylrest, der 2,2,2',2',2'-Hexafluorisopropylrest und der Heptafluorisopropylrest.

Besonders bevorzugt sind die nicht substituierten $C_4$-$C_{12}$-Alkylreste.

Das Imprägnierungsmittel, welches dem Baustoffbeschichtungsmittel zugesetzt wird, kann neben Alkylalkoxysilanen Alkoxygruppen enthaltendes Organopolysiloxan (A) enthalten. Das Organopolysiloxan (A) kann zusätzlich Hydroxylgruppen enthalten, die eine Bindung an die Baustoffe erleichtern.

Das Alkoxygruppen enthaltende Organopolysiloxan (A) weist vorzugsweise eine Viskosität von höchstens 2000 mm²/s auf, um eine besonders gute Verteilung auf den Porenoberflächen im Mauerwerk zu erreichen.

Besonders geeignet sind die Alkoxygruppen enthaltenden Organopolysiloxane (A) aus Einheiten der allgemeinen Formel (I)

$$R_xSi(OR^1)_y(OH)_zO_{\frac{4-x-y-z}{2}} \qquad (I)$$

in der

R      gleiche oder verschiedene einwertige, gegebenenfalls halogensubstituierte, über SiC-gebundene $C_1$-$C_{20}$-Kohlenwasserstoffreste,

$R^1$   gleiche oder verschiedene einwertige $C_1$-$C_6$-Alkylreste,

x      0, 1, 2 oder 3, durchschnittlich 0,8 bis 1,8,

y      0, 1, 2, oder 3, durchschnittlich 0,01 bis 2,0 und

z      0, 1, 2 oder 3, durchschnittlich 0,0 bis 0,5 bedeuten, mit der Maßgabe, daß die Summe von x, y und z höchstens 3,5 beträgt.

Vorzugsweise besitzt das Organopolysiloxan (A) eine Viskosität von 10 mm²/s bis 50000 mm²/s, insbesondere 50 mm²/s bis 5000 mm²/s bei 25°C.

Beispiele für die $C_1$-$C_{20}$-Kohlenwasserstoffreste sind die vorstehend bei den Alkylalkoxysilanen aufgeführten $C_1$-$C_{20}$-Alkylreste und halogensubstituierten $C_1$-$C_{20}$-Alkylreste, die Alkenylreste, wie der Vinyl-, Allyl, n-5-Hexenyl-, 4-Vinylcyclohexyl- und der 3-Norbornenylrest; Arylreste, wie der Phenyl-, Biphenylyl-, Naphthyl- und Anthryl- und Phenanthrylrest; Alkarylreste, wie o-, m-, p-Tolylreste, Xylylreste und Ethylphenylreste; Aralkylreste, wie der Benzylrest, der alpha- und der β-Phenylethylrest. Besonders bevorzugt sind die nicht substituierten $C_1$-$C_{12}$-Alkylreste und der Phenylrest.

Obwohl in der vorstehend aufgeführten Formel nicht aufgeführt, kann ein Teil der Reste **R** durch direkt an Siliciumatome gebundene Wasserstoffatome ersetzt sein. Dies ist jedoch nicht bevorzugt.

Beispiele für die Reste **R¹** sind der Methyl-, Ethyl-, n-Propyl-, Isopropyl-, n-Butyl-, sec.-Butyl-, und tert.-Butylrest; Pentylreste, wie der n-Pentylrest und Hexylreste, wie der n-Hexylrest, wobei die Ethylreste besonders bevorzugt sind.

Vorzugsweise hat **x** einen durchschnittlichen Wert von 0,9 bis 1,1. Vorzugsweise hat **y** einen durchschnittlichen Wert von 0,4 bis 1,2. Vorzugsweise hat **z** einen durchschnittlichen Wert von 0,0 bis 0,2.

Beispiele für das Alkoxygruppen enthaltende Organopolysiloxan (A) sind solche, die durch Umsetzung von Methyltrichlorsilan und gegebenenfalls einem $C_1$-$C_8$-Alkyltrichlorsilan, oder Phenyltrichlorsilan mit Ethanol in Wasser erhältlich sind, wie die Organopolysiloxane der Summenformeln

$$CH_3Si(OC_2H_5)_{0,8}O_{1,1}$$

oder

$$C_6H_5Si(OC_2H_5)_{0,72}O_{1,14}.$$

Das Imprägnierungsmittel, welches dem Baustoffbeschichtungsmittel zugesetzt wird, kann neben Alkylalkoxysilanen auch Organopolysiloxan (B) enthalten, das zusätzlich zu anderen Organosiloxaneinheiten solche Siloxaneinheiten enthält, die SiC-gebundene Reste mit basischem Stickstoff aufweisen, mit der Maßgabe, daß die Aminzahl des Organopolysiloxans mindestens 0,01 beträgt.

Die Organopolysiloxane (B) sind vorzugsweise solche aus Einheiten der allgemeinen Formel (II)

$$R^2{}_aR^3{}_b(OR^4)_cSiO_{\frac{4-a-b-c}{2}} \qquad (II)$$

in der

**R²**   gleiche oder verschiedene einwertige, von basischem Stickstoff freie, gegebenenfalls halogensubstituierte, SiC-gebundene $C_1$-$C_{20}$-Kohlenwasserstoffreste bedeutet,

**R³**   gleiche oder verschiedene einwertige, gegebenenfalls halogensubstituierte, SiC-gebundene basischen Stickstoff aufweisende $C_1$-$C_{30}$-Kohlenwasserstoffreste bedeutet,

**R⁴**   gleich oder verschieden sein kann und Wasserstoffatom oder $C_1$-$C_6$-Alkylreste bedeutet,

**a**   0, 1, 2 oder 3,

**b**   0, 1, 2 oder 3, durchschnittlich mindestens 0,05 und

**c**   0, 1, 2 oder 3 ist,

mit der Maßgabe, daß die Summe aus **a, b** und **c** kleiner oder gleich 3 ist und daß die Aminzahl des Organopolysiloxans (B) mindestens 0,01 beträgt.

Die Aminzahl bezeichnet die Anzahl der ml 1-n-HCl, die zum Neutralisieren von 1 g Organopolysiloxan (B) erforderlich sind. Die Aminzahl des Organopolysiloxans (B) beträgt vorzugsweise mindestens 0,1, insbesondere mindestens 0,2, und vorzugsweise höchstens 8, insbesondere höchstens 4.

Beispiele und bevorzugte Beispiele für den Rest **R²** sind vorstehend bei Rest **R** aufgeführt. Insbesondere sind der Methylund der Isooctylrest bevorzugt.

Vorzugsweise ist an jedes Siliciumatom, an das ein Wasserstoffatom gebunden ist, auch ein Kohlenwasserstoffrest, insbesondere ein Methylrest, gebunden.

Bevorzugt handelt es sich bei Rest **R³** um einen Rest der allgemeinen Formel (III)

$$R^5{}_2NR^6- \qquad (III),$$

worin

**R⁵** gleich oder verschieden sein kann und Wasserstoff oder einwertiger, gegebenenfalls substituierter $C_1$-$C_{10}$-Kohlenwasserstoffrest oder $C_1$-$C_{10}$-Aminokohlenwasserstoffrest und

**R⁶** einen zweiwertigen $C_1$-$C_{15}$-Kohlenwasserstoffrest bedeutet.

Beispiele für Rest **R⁵** sind die für Rest **R** gegebenen Beispiele für Kohlenwasserstoffreste sowie mit Aminogruppen substituierte Kohlenwasserstoffreste, wie Aminoalkylreste, wobei der Aminoethylrest besonders bevorzugt ist.

Vorzugsweise ist an jedes Stickstoffatom in den Resten der allgemeinen Formel (III) mindestens ein Wasserstoffatom gebunden.

Bevorzugt handelt es sich bei Rest **R⁶** um zweiwertige Kohlenwasserstoffreste mit 1 bis 10 Kohlenstoffatomen, besonders bevorzugt 1 bis 4 Kohlenstoffatomen, insbesondere um den n-Propylenrest.

Beispiele für Rest **R⁶** sind der Methylen-, Ethylen-, Propylen-, Butylen-, Cyclohexylen-, Octadecylen-, Phenylen- und Butenylenrest.

Bevorzugte Beispiele für Reste **R³** sind

$$H_2N(CH_2)_3-,$$

$$H_2N(CH_2)_2NH(CH_2)_2-,$$

$$H_2N(CH_2)_2NH(CH_2)_3-,$$

$$H_2N(CH_2)_2-,$$

$$H_3CNH(CH_2)_3-,$$

$$C_2H_5NH(CH_2)_3-,$$

$$H_3CNH(CH_2)_2-,$$

$$C_2H_5NH(CH_2)_2-,$$

$$H_2N(CH_2)_4-,$$

$$H_2N(CH_2)_5-,$$

$$H(NHCH_2CH_2)_3-,$$

$$C_4H_9NH(CH_2)_2NH(CH_2)_2-,$$

$$cyclo\text{-}C_6H_{11}NH(CH_2)_3-,$$

$$cyclo\text{-}C_6H_{11}NH(CH_2)_2-,$$

$$(CH_3)_2N(CH_2)_3-,$$

$$(CH_3)_2N(CH_2)_2-,$$

$$(C_2H_5)_2N(CH_2)_3-$$

und

$$(C_2H_5)_2N(CH_2)_2-.$$

Die Beispiele für Alkylreste **R**[1] gelten im vollen Umfang auch für den Rest **R**[6].

Beispiele und bevorzugte Beispiele für den Rest **R**[4] sind vorstehend bei Rest **R**[1] aufgeführt. Insbesondere sind der Methylund der Ethylrest bevorzugt.

Der bevorzugte durchschnittliche Wert für **a** ist 0 bis 2, insbesondere 0 bis 1,8.

Der bevorzugte durchschnittliche Wert für **b** ist 0,1 bis 0,6, insbesondere 0,15 bis 0,30.

Der bevorzugte durchschnittliche Wert für **c** ist 0 bis 0,8, insbesondere 0,01 bis 0,6.

Vorzugsweise haben die Organopolysiloxane (B) eine Viskosität von 5 bis 5000, insbesondere von 100 bis 3000 mm$^2$/s bei 25°C.

Organopolysiloxane (B) können in bekannter Weise, beispielsweise durch Äquilibrieren bzw. Kondensieren von aminofunktionellen Silanen mit Organopolysiloxanen, die Alkoxygruppen und/ oder Hydroxylgruppen enthalten und die frei von basischem Stickstoff sind, hergestellt werden.

Das wasserhaltige imprägnierende Baustoffbeschichtungsmittel enthält vorzugsweise 3 bis 25 Gew.-%, insbesondere 8 bis 20 Gew.-%, des Imprägnierungsmittels.

Der Anteil an gegebenenfalls eingesetztem Organopolysiloxan (A) und Organopolysiloxan (B) beträgt vorzugsweise zusammen höchstens 60 Gew.-% des Imprägnierungsmittels.

Die Ausrüstung mit Imprägnierungsmittel kann unmittelbar vor Auftrag der Beschichtung oder bereits werkseitig beim Beschichtungsmittelhersteller erfolgen.

Das Imprägnierungsmittel wird entweder als wäßrige Emulsion oder in reiner Form dem Baustoffbeschichtungsmittel zugesetzt. Beispielsweise wird das Imprägnierungsmittel bei der Herstellung des Baustoffbeschichtungsmittels eingearbeitet, um das wasserhaltige imprägnierende Baustoffbeschichtungsmittel zu erhalten.

Wenn das Imprägnierungsmittel als wäßrige Emulsion oder in reiner Form dem Baustoffbeschichtungsmittel zugesetzt wird eignen sich als anionische Emulgatoren besonders:

1. Alkylsulfate, besonders solche mit einer Kettenlänge von 8 bis 18 C-Atomen, Alkyl- und Alkarylethersulfate mit 8 bis 18 C-Atomen im hydrophoben Rest und 1 bis 40 Ethylenoxid (EO)-bzw. Propylenoxid(PO)einheiten.

2. Sulfonate, besonders Alkylsulfonate mit 8 bis 18 C-Atomen, Alkylarylsulfonate mit 8 bis 18 C-Atomen, Tauride, Ester und Halbester der Sulfobernsteinsäure mit einwertigen Alkoholen oder Alkylphenolen mit 4 bis 15 C-Atomen; gegebenenfalls können diese Alkohole oder Alkylphenole auch mit 1 bis 40 EO-Einheiten ethoxyliert sein.

3. Alkali- und Ammoniumsalze von Carbonsäuren mit 8 bis 20 C-Atomen im Alkyl-, Aryl-, Alkaryl- oder Aralkylrest.

4. Phosphorsäureteilester und deren Alkali- und Ammoniumsalze, besonders Alkyl- und Alkarylphosphate mit 8 bis 20 C-Atomen im organischen Rest, Alkylether- bzw. Alkaryletherphosphate mit 8 bis 20 C-Atomen im Alkyl- bzw. Alkarylrest und 1 bis 40 EO-Einheiten.

Als nichtionische Emulgatoren eignen sich besonders:

5. Polyvinylalkohol, der noch 5 bis 50 %, vorzugsweise 8 bis 20 %, Vinylacetateinheiten aufweist, mit einem Polymerisationsgrad von 500 bis 3000.

6. Alkylpolyglycolether, vorzugsweise solche mit 8 bis 40 EO-Einheiten und Alkylresten von 8 bis 20 C-Atomen.

7. Alkylarylpolyglycolether, vorzugsweise solche mit 8 bis 40 EO-Einheiten und 8 bis 20 C-Atomen in den Alkyl- und Arylresten.

8. Ethylenoxid/Propylenoxid(EO/PO)-Blockcopolymere, vorzugsweise solche mit 8 bis 40 EO- bzw. PO-Einheiten.

9. Additionsprodukte von Alkylaminen mit Alkylresten von 8 bis 22 C-Atomen mit Ethylenoxid oder Propylenoxid.

10. Fettsäuren mit 6 bis 24 C-Atomen.

11. Alkylpolyglykoside der allgemeinen Formel $R^*-O-Z_o$, worin $R^*$ einen linearen oder verzweigten, gesättigten oder ungesättigten Alkylrest mit im Mittel 8 - 24 C-Atomen und $Z_o$ einen Oligoglykosidrest mit im Mittel o = 1 - 10 Hexose- oder Pentoseeinheiten oder Gemischen davon bedeuten.

12. Naturstoffe und deren Derivate, wie Lecithin, Lanolin, Saponine, Cellulose; Cellulosealkylether und Carboxyalkylcellulosen, deren Alkylgruppen jeweils bis zu 4 Kohlenstoffatome besitzen.

13. Polare Gruppen enthaltende lineare Organo(poly)siloxane, insbesondere solche mit Alkoxygruppen mit bis zu 24 C-Atomen und/oder bis zu 40 EO- und/oder PO-Gruppen.
Als kationische Emulgatoren eignen sich besonders:

14. Salze von primären, sekundären und tertiären Fettaminen mit 8 bis 24 C-Atomen mit Essigsäure, Schwefelsäure, Salzsäure und Phosphorsäuren.

15. Quarternäre Alkyl- und Alkylbenzolammoniumsalze, insbesondere solche, deren Alkylgruppe 6 bis 24 C-Atome besitzen, insbesondere die Halogenide, Sulfate, Phosphate und Acetate.

16. Alkylpyridinium-, Alkylimidazolinium- und Alkyloxazoliniumsalze, insbesondere solche, deren Alkylkette bis zu 18 C-Atome besitzt, speziell die Halogenide, Sulfate, Phosphate und Acetate.
Als ampholytische Emulgatoren eignen sich besonders:

17. Langkettig substituierte Aminosäuren, wie N-Alkyl-di-(aminoethyl-)glycin oder N-Alkyl-2-aminopropionsäuresalze.

18. Betaine, wie
N-(3-Acylamidopropyl)-N,N-dimethylammoniumsalze mit einem $C_8$-$C_{18}$-Acylrest und Alkyl-imidazolium-Betaine.

Bevorzugt als Emulgatoren sind nichtionische Emulgatoren, insbesondere die vorstehend unter 9. aufgeführten Additionsprodukte von Alkylaminen mit Ethylenoxid oder Propylenoxid, die vorstehend unter 11. aufgeführten Alkylpolyglykoside und der vorstehend unter 5. aufgeführte Polyvinylalkohol. Besonders bevorzugte Polyvinylalkohole enthalten noch 5 bis 20 %, insbesondere 10 bis 15 %, Vinylacetateinheiten und weisen vorzugsweise einen Polymerisationsgrad von 500 bis 3000, insbesondere von 1200 bis 2000, auf.

Der Anteil des Emulgators beträgt vorzugsweise 1 bis 30 Gew.-%, insbesondere 2 bis 10 Gew.-%, bezogen auf die Gesamtmenge des Imprägnierungsmittels.

Das wasserhaltige imprägnierende Baustoffbeschichtungsmittel kann auch noch Puffersubstanzen enthalten, die den pH-Wert im Bereich von 5 bis 8 stabilisieren, in dem das Imprägnierungsmittel sehr hydrolysebeständig ist. Geeignet sind alle organischen und anorganischen Säuren und Basen, die sich gegenüber den übrigen Bestandteilen der Baustoffbeschichtungsmittel chemisch inert verhalten, insbesondere die Alkali-, Erdalkaliund Ammoniumsalze von Carbonsäuren, Phosphor-, Kohlen- und Schwefelsäure. Besonders bevorzugt sind Natriumcarbonat, Natriumhydrogencarbonat, Natriumhydrogenphosphat, und ein Gemisch aus Essigsäure und wässriger Ammoniaklösung. Die bevorzugte Menge an Puffersubstanzen beträgt vorzugsweise höchstens 3, insbesondere 1 Gew.-%, der Gesamtmenge der wasserhaltigen imprägnierenden Baustoffbeschichtungsmittel.

Die wasserhaltigen imprägnierenden Baustoffbeschichtungsmittel können zusätzlich zu den vorstehend beschriebenen Bestandteilen Zusatzstoffe, wie Fungizide, Bakterizide, Algicide, Mikrobicide, Geruchsstoffe, Korrosionsinhibitoren und Entschäumer enthalten. Die bevorzugte Menge an Zusatzstoffen beträgt höchstens 2, insbesondere 0,5 Gew.-% der Gesamtmenge der wasserhaltigen imprägnierenden Baustoffbeschichtungsmittel.

Die Erfindung betrifft auch ein Baustoffbeschichtungsmittel für mineralische Baustoffe, welches 1 bis 30 Gew.-% $C_1$-$C_{20}$-Alkyl-$C_1$-$C_6$-Alkoxysilan und gegebenenfalls Alkoxygruppen enthaltendes Organopolysiloxan (A) als Imprägnierungsmittel enthält.

In den folgenden Beispielen beziehen sich alle Angaben von Teilen und Prozentsätzen, soweit nichts anderes angegeben ist, auf das Gewicht. Sofern nicht anders angegeben, werden die nachstehenden Beispiele bei einem Druck der umgebenden Atmosphäre, also etwa bei 0,10 MPa, und bei Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt. Alle in den Beispielen angeführten Viskositätsangaben beziehen sich auf eine Temperatur von 25°C. Der Festgehalt der Emulsionen bezeichnet die Summe aller Komponenten, mit Ausnahme von Wasser.

**Beispiele**

Beispiel 1 Siliconharzfarbe (Vergleichsbeispiel):

Vermischt werden in einem handelsüblichen, schnellaufendem Rührwerk zur Herstellung von wäßrigen Bautenbeschichtungen in dieser Reihenfolge:

| | |
|---|---|
| 336 Gew.-Teile | Wasser |
| 1 Gew.-Teil | Pigmentverteiler |
| 2 Gew.-Teile | Fungizid |
| 5 Gew.-Teile | Verdicker auf Basis Celluloseether |
| 120 Gew.-Teile | Titandioxid |
| 275 Gew.-Teile | Kreide |
| 60 Gew.-Teile | Talkum |
| 95 Gew.-Teile | einer ca. 54 Gew.-%igen wäßrigen Siliconharzemulsion, bestehend aus 90 Mol-% $CH_3SiO_{3/2}$-Einheiten, 20 Mol-% $(CH_3)_2SiO_{2/2}$-Einheiten und 10 Mol-% $C_2H_5OSiO_{3/2}$-Einheiten |
| 10 Gew.-Teile | einer 55 Gew.-%igen wäßrigen Emulsion eines Kondensationsprodukts aus eines in den endständigen Einheiten je eine Si-gebundene Hydroxylgruppe aufweisenden $\alpha,\omega$-Dihydroxymethylpolysiloxans und N(-2-Aminoethyl)-3-aminopropyltrimethoxysilan in Gegenwart von KOH mit einer Aminzahl von etwa 0,3, einer Viskosität von etwa 1500 mm$^2$/s bei 25 °C und einem Restmethoxygehalt von weniger als 5 Mol-%, bezogen auf die anfangs im N(-2-Aminoethyl)-3-aminopropyltrimethoxysilan vorhandenen Methoxygruppen. |
| 1 Gew.-Teil | Ammoniaklösung |
| 95 Gew.-Teile | einer ca. 50 Gew.-%igen Polymerdispersion auf Basis Styrolacrylat (Acronal® 290 D von BASF AG, Deutschland) |
| ergibt: | |
| 1000 Gew.-Teile | Siliconharzfarbe |

Ein Kalksandstein wird mit dem Pinsel mit 200 g/m$^2$ dieser Siliconharzfarbe beschichtet. Nach 14 Tagen Lagerung des beschichteten Substrats bei Raumtemperatur im Normklima werden Haftzugfestigkeit nach DIN ISO 4624 bestimmt, sowie die Dicke der hydrophoben Zone (Eindringtiefe) unterhalb der Beschichtung. Letztere wird bestimmt durch Brechen des Substrats und durch Anfeuchten der Bruchstelle mit Wasser. Es ergeben sich folgende Werte:

Eindringtiefe: 0 mm
Haftzugfestigkeit: 1,50 N/mm$^2$

Beispiel 2

Der gemäß Beispiel 1 hergestellten Siliconharzfarbe (SHF) wird Silanemulsion EM 8 in den in der Tabelle 1 angegebenen Mengen durch Einrühren zugesetzt.

Herstellung der Silanemulsion EM 8:

54 Gewichtsteile iso-Octyltriethoxysilan werden mit 6 Gewichtsteilen des Kondensationsprodukts aus eines in den endständigen Einheiten je eine Si-gebundene Hydroxylgruppe aufweisenden $\alpha,w$-Dihydroxymethylpolysiloxans und

N(-2-Aminoethyl)-3-aminopropyltrimethoxysilan in Gegenwart von KOH mit einer Aminzahl von etwa 0,3, einer Viskosität von etwa 1500 mm$^2$/s bei 25°C und einem Restmethoxygehalt von weniger als 5 Mol-%, bezogen auf die anfangs im

N(-2-Aminoethyl)-3-aminopropyltrimethoxysilan vorhandenen Methoxygruppen,

0,5 Gewichtsteilen eines Umsetzungsprodukts aus Stearylamin und Ethylenoxid (Genamin® 200 von Hoechst AG, Frankfurt),

2,7 Gewichtsteilen eines Fettalkohol-$C_8$-$C_{10}$-Glykosids in wäßriger Lösung (Glukopon® 225 von Henkel KGaA, Düsseldorf) und

36,8 Gewichtsteilen Wasser emulgiert.

Die wäßrigen Emulsionen werden dadurch hergestellt, daß zunächst ein Teil des Wassers mit Emulgiermittel vermischt wird und aminofunktionelles Polysiloxan gefolgt von Silan emulgiert wird. Sowohl das zunächst erwähnte Vermischen als auch das Emulgieren erfolgt in einer schnellaufenden Stator-Rotor-Rührvorrichtung nach Prof. P. Willems.

Die erhaltene selbstgrundierende Siliconharzfarbe weist nach Auftrag auf Kalksandstein, Lagerung des Substrats und Bestimmung von Eindringtiefe und Haftzugfestigkeit gemäß Beispiel 1 die in Tabelle 1 aufgeführten Werte auf:

Tabelle 1

| Beispiel 2 | Zugabe von EM 8 zu 100 g SHF | Auftragsmenge SHF | Eindringtiefe | Haftzugfestigkeit |
|---|---|---|---|---|
| a) | 2 g | 204 g/m$^2$ | 0,1 mm | 1,90 N/mm$^2$ |
| b) | 10 g | 220 g/m$^2$ | 0,5 mm | ∗2,86 N/mm$^2$ |
| c) | 20 g | 240 g/m$^2$ | 1,5 mm | ∗ 2,94 N/mm$^2$ |
| d) | 30 g | 260 g/m$^2$ | 2,0 mm | ∗ 2,90 N/mm$^2$ |
| e) | 50 g | 300 g/m$^2$ | 2,5 mm | ∗ 2,82 N/mm$^2$ |
| f) | ∗∗20 g | 240 g/m$^2$ | 1,5 mm | ∗ 2,90 N/mm$^2$ |

∗ Steinausrisse werden gefunden; Haftzugfestigkeit ist größer als Eigenfestigkeit des Kalksandsteins.

∗∗ Zugabe von 20 g EM 8 zu 100 g Silcionharzfarbe und anschließende 4monatige Raumtemperaturlagerung der Mischung vor Auftrag auf Kalksandstein

Beispiel 3 (Vergleichsbeispiel)

Die Silanemulsion EM 8 wird alleine als Grundiermittel verwendet. Hierzu wird sie mit Wasser im Verhältnis 1 : 9 verdünnt. Kalksandsteine werden mit dieser EM 8-Verdünnung gemäß Beispiel 1 behandelt, gelagert und es wird die Eindringtiefe bestimmt.

Die erhaltenen Werte sind in Tabelle 2 angegeben:

Tabelle 2

| Beispiel 3 | Auftragsmenge | Eindringtiefe |
|---|---|---|
| a) | 40 g/m$^2$ | 0,2 mm |
| b) | 200 g/m$^2$ | 1,0 mm |
| c) | 400 g/m$^2$ | 2,0 mm |
| d) | 600 g/m$^2$ | 2,5 mm |
| e) | 1000 g/m$^2$ | 3,0 mm |

Beispiel 4

I-Octyltriethoxysilan wird bei der Herstellung der Siliconharzfarbe zugesetzt, um eine selbstgrundierende Siliconharzfarbe zu erhalten.

Vermischt werden in einem handelsüblichen schnellaufendem Rührwerk zur Herstellung von wäßrigen Bautenbeschichtungen in dieser Reihenfolge:

| 53 Gew.-Teile | einer ca. 55 Gew.-%igen, wäßrigen Emulsion des in Beispiel 2 bei der Herstellung der Silanemulsion EM 8 beschriebenen Kondensationsprodukts |
|---|---|

(fortgesetzt)

| 8 Gew.-Teile | eines Fettalkohol $C_8$-$C_{10}$ Glykosids in wäßriger Lösung (Glukopon® 225 von Henkel KGaA, Düsseldorf) |
|---|---|
| 106 Gew.-Teile | i-Octyltriethoxysilan |
| 379 Gew.-Teile | Wasser |
| 1 Gew.-Teil | Pigmentverteiler |
| 2 Gew.-Teile | Fungizid |
| 5 Gew.-Teile | Verdicker auf Basis Celluloseether |
| 120 Gew.-Teile | Titandioxid |
| 275 Gew.-Teile | Kreide |
| 60 Gew.-Teile | Talkum |
| 95 Gew.-Teile | einer ca. 54 Gew.-%igen wäßrigen Siliconharzemulsion, bestehend aus $CH_3SiO_{3/2}$-Einheiten, mit etwa 20 Mol-% $(CH_3)_2SiO_{2/2}$-Einheiten und etwa 10 Mol-% $C_2H_5OSiO_{3/2}$-Einheiten |
| 1 Gew.-Teil | Ammoniaklösung |
| 95 Gew.-Teile | einer ca. 50 Gew.-%igen Polymerdispersion auf Basis Styrolacrylat (Acronal® 290 D von BASF AG, Deutschland) |
| ergibt: | |
| 1200 Gew.-Teile | Siliconharzfarbe |

Ein Kalksandstein wird mit dem Pinsel mit 240 g/m$^2$ dieser selbstgrundierenden Siliconharzfarbe beschichtet, wie in Beispiel 1 beschrieben, gelagert, Eindringtiefe und Haftzugfestigkeit bestimmt.
Es ergaben sich folgende Werte:

Eindringtiefe: 1,5 mm
Haftzugfestigkeit: 2,75 N/mm$^2$

Beispiel 5 (Vergleichsbeispiel)

20 g i-Octyltriethoxysilan werden mit 180 g aliphatischem Lösemittel (white spirit) vermischt. Ein Kalksandstein wird mit dieser Mischung gemäß Beispiel 1 durch Pinselauftrag (200 g/m$^2$) behandelt, gelagert und es wird die Eindringtiefe bestimmt.
Folgender Wert wird erhalten:

Eindringtiefe: 1,5 mm

Beispiel 6

Die gemäß Beispiel 1 hergestellte Siliconharzfarbe sowie eine käufliche Dispersionsfassadenfarbe auf Acrylatpolymerbasis (Maxicryl® der Sto AG, Stühlingen, Deutschland) werden mit jeweils 20 Gew.-% der nachstehenden Silanemulsionen Nr. 1 bis 4, bzw. Wasser vermischt. Die so erhaltenen selbstgrundierenden Bautenbeschichtungen werden nach Auftrag auf Kalksandstein und Lagerung bezüglich Bestimmung Eindringtiefe ausgewertet.

Silanemulsionen Nr.1 bis Nr.4:

Nr.1: Ein Gemisch aus 100 g Polysiloxandiol mit einem Molekulargewicht von 6803 g / Mol und 32,5 g $\gamma$-Aminopropyltriethoxysilan wird unter Rühren und Durchleiten von Stickstoff auf 180°C erwärmt und etwa 4 Stunden bei dieser Temperatur gehalten, bis 8,8 g Ethanol ausgetrieben worden sind. Das entstandene Produkt wird anschließend abgekühlt. 125 g dieses Produkts werden mit 125 g Isobutyltrimethoxysilan gemischt. Diese Zubereitung wird mit 20 g eines Emulgatorgemisches, bestehend aus einem
Methylpolyoxyethylen(15)cocoammoniumchlorid im Gewichtverhältnis 1:1 versetzt und nach Zugabe von 335 g Wasser mit einem nach dem Rotor-/Stator-Prinzip arbeitenden Gerät zu einer Emulsion verarbeitet. Die Emulsion ist 40 Gew.-%ig an Isobutyltrimethoxysilan.

Nr.2: 10 g n-Octyltriethoxysilan und 1,5 g Sorbitmonooctadecanoat werden heftig mit einem Magnetrührer verrührt und im Laufe von 5 Minuten mit 38,5 g Wasser versetzt. Die Emulsion ist 20 Gew.-%ig an n-Octyltriethoxysilan.

Nr.3: 58,4 g Wasser, 1,25 g Tensid der Formel

$$H_3C\text{-}(CH_2)_u\text{-}CH{=}CH\text{-}(CH_2)_u\text{-}(OCH_2\text{-}CH_2)_5\text{-}O\text{-}Si(OC_2H_5)_2\text{-}(CH_2)_u\text{-}CH_3$$

mit u = 6-10 und 0,35 g Natriumoctylsulfonat werden unter Rühren vorgelegt. Zu dieser Mischung werden 40 g n-Octyltriethoxysilan verrührt und anschließend mit Natriumhydrogencarbonat auf pH 7,5 eingestellt. Die Emulsion ist 40 Gew.-%ig an n-Octyltriethoxysilan.

Nr.4: 61,81 g eines Gemisches aus 0,97 Gewichtsteilen n-Octyltriethoxysilan und 1 Gewichtsteil eines Harzes der mittleren Formel $(CH_3)_{0,8}$ $(C_{12}H_{25})_{0,2}Si(O)_1(OCH_3)_1$ werden mit 1 g eines Gemisches aus einem Ethylenoxid-Addukt eines Fettalkohols und einem Polyethylenoxid-Sorbitanlaurat mit einem HLB-Wert von 15 in Gegenwart von 0,1 g Ethanolamin und 37,1 g Wasser bei 200 bar im Strahldispergator mit 2 hintereinandergeschalteten Düsen zweimal dispergiert. Die mittlere Teilchengröße beträgt 0,834 μm. Die Emulsion ist 60 Gew.-%ig an Imprägnierungsmittel.

Die Ergebnisse sind in Tabelle 3 aufgeführt:

Tabelle 3

| Beispiel 6 * | Zugesetzte Silanemulsion | Eindringtiefe | |
|---|---|---|---|
| | | Dispersionsfarbe | SHF Beispiel 1 |
| a) | Nr. 1 | – ** | 1 mm |
| b) | Nr. 2 | – ** | 0,5 mm |
| c) | Nr. 3 | 0,5 mm | 0,5 mm |
| d) | Nr. 4 | 0,5 mm | 0,5 mm |
| e) Vergleich | Wasser | 0 mm | 0 mm |

* Auftragsmenge der selbstgrundierenden Beschichtung auf Kalksandstein: 240 g/m$^2$
Zugabe der Silanemulsionen Nr. 1 bis Nr. 4 bzw. Zugabe von Wasser zu 100 g Bautenbeschichtung: 20 g
** wurde nicht bestimmt.

Beispiel 7

In 100 g Dispersionsfassadenfarbe auf Acrylatbasis des Beispiels 6 werden 30 g EM 8 aus Beispiel 2 eingerührt. Die so erhaltene selbstgrundierende Dispersionsfarbe weist nach Auftrag auf Kalksandstein und Lagerung des Substrats gemäß Beispiel 1 folgende Werte auf:

Eindringtiefe: 0,5 mm
Haftzugfestigkeit: 2,60 N/mm$^2$

Ohne Zusatz von EM 8 weist die Beschichtung folgende Werte auf:

Eindringtiefe: 0 mm
Haftzugfestigkeit: 2,15 N/mm$^2$

Beispiel 8

Es wird wie in Beispiel 7 vorgegangen. Jedoch werden 30 g EM 8 in 100 g einer Dispersionssilikatfarbe eingerührt (ISPO® -Silikatfarbe von Ispo GmbH, Kriftel). Folgende Eindringtiefe der selbstgrundierenden Dispersionssilikatfarbe wird gefunden: 1,5 mm. Ohne Zusatz von EM8 beträgt die Eindringtiefe 0 mm.

**EP 0 791 566 B1**

**Patentansprüche**

1. Verfahren zur Beschichtung und wasserabweisenden Imprägnierung von mineralischem Baustoff, bei dem ein Baustoffbeschichtungsmittel, welches 1 bis 30 Gew.-% $C_1$-$C_{20}$-Alkyl-$C_2$-$C_3$-Alkoxysilan als Imprägnierungsmittel enthält, auf den Baustoff aufgetragen wird, **dadurch gekennzeichnet, daß** das Baustoffbeschichtungsmittel eine Anstrichfarbe ist.

2. Verfahren nach Anspruch 1, bei dem die $C_1$-$C_{20}$-Alkyl-$C_2$$C_3$-Alkoxysilane 1 oder 2 gleiche oder verschiedene, gegebenenfalls halogensubstituierte, über SiC-gebundene einwertige $C_1$-$C_{20}$-Alkylreste aufweisen und die übrigen Reste gleiche oder verschiedene $C_2$-$C_3$-Alkoxyreste sind.

3. Verfahren nach einem der Ansprüche 1 oder 2, bei dem das Imprägnierungsmittel Alkoxygruppen enthaltendes Organopolysiloxan (A) enthält.

4. Verfahren nach einem der Ansprüche 1 bis 3, bei dem das Imprägnierungsmittel, Organopolysiloxan (B) enthält, das zusätzlich zu anderen Organosiloxaneinheiten solche Siloxaneinheiten enthält, die SiC-gebundene Reste mit basischem Stickstoff aufweisen, mit der Maßgabe, daß die Aminzahl des Organopolysiloxans (B) mindestens 0,01 beträgt.

**Claims**

1. Process for the coating and water-repellent impregnation of mineral building material, in which an architectural coating composition containing from 1 to 30 % by weight of $C_1$-$C_{20}$-alkyl-$C_2$-$C_3$-alkoxysilane as impregnating agent is applied to the building material, **characterized in that** the architectural coating composition is a paint.

2. Process according to Claim 1, wherein the $C_1$-$C_{20}$-alkyl-$C_2$-$C_3$-alkoxysilanes have 1 or 2 identical or different, optionally halogen-substituted SiC-bonded, monovalent $C_1$-$C_{20}$-alkyl radicals, and the other radicals are identical or different $C_2$-$C_3$-alkoxy radicals.

3. Process according to Claims 1 or 2, wherein the impregnating agent comprises alkoxy-containing organopolysiloxane (A).

4. Process according to one of Claims 1 to 3, wherein the impregnating agent includes (B) which in addition to other organosiloxane units includes those siloxane units having SiC-bonded radicals containing basic nitrogen, with the proviso that the amine number of the organopolysiloxane (B) is at least 0.01.

**Revendications**

1. Procédé pour le revêtement et l'imprégnation hydrofuge d'un matériau de construction minéral, dans lequel un agent de revêtement de matériaux de construction, qui contient 1 à 30% en poids de (alkyle en $C_1$ à $C_{20}$) (alcoxy en $C_2$ à $C_3$) silane comme agent d'imprégnation, est appliqué sur le matériau de construction, **caractérisé en ce que** l'agent de revêtement de matériau de construction est une peinture.

2. Procédé selon la revendication 1, dans lequel les (alkyle en $C_1$ à $C_{20}$) (alcoxy en $C_2$ à $C_3$) silanes présentent 1 ou 2 radicaux alkyle en $C_1$ à $C_{20}$ monovalents, liés par SiC, identiques ou différents, le cas échéant substitués par un halogène et les autres radicaux sont des radicaux alcoxy en $C_2$ à $C_3$ identiques ou différents.

3. Procédé selon l'une quelconque des revendications 1 ou 2, dans lequel l'agent d'imprégnation contient un organopolysiloxane (A) contenant des groupements alcoxy.

4. Procédé selon l'une quelconque des revendications 1 à 3, dans lequel l'agent d'imprégnation contient un organopolysiloxane (B) qui contient, en plus d'autres unités organosiloxane, des unités siloxane qui présentent des radicaux liés par SiC avec de l'azote basique, sous réserve que l'indice d'amine de l'organopolysiloxane (B) soit d'au moins 0,01.